# EUROPEAN PATENT SPECIFICATION

(11) **EP 1 710 852 B1**
(45) Date of publication and mention of the grant of the patent: **31.05.2017**
(21) Application number: 05028279.7
(22) Date of filing: 23.12.2005
(51) Int. Cl.: H01M 2/10

(54) **Portable computer with removable battery casing**
Labtop mit abnehmbarem Batteriefach
Ordinateur portable avec un compartiment de batterie amovible

(30) Priority: 07.04.2005 CN 200510063245
(43) Date of publication of application: 11.10.2006
(73) Proprietor: ASUSTeK Computer Inc., Taipei (TW)
(72) Inventor: Ke, Lian Tien, Taipei (TW)
(74) Representative: Ter Meer Steinmeister & Partner

(56) References cited:
- US-A- 5 901 035
- US-A- 6 002 583
- US-A1- 2006 141 345
- US-B1- 6 385 041
- US-B1- 6 613 473
- PATENT ABSTRACTS OF JAPAN vol. 1998, no. 13, 30 November 1998 (1998-11-30) & JP 10 222259 A (CITIZEN WATCH CO LTD), 21 August 1998 (1998-08-21)
- PATENT ABSTRACTS OF JAPAN vol. 1996, no. 07, 31 July 1996 (1996-07-31) & JP 08 076898 A (CITIZEN WATCH CO LTD), 22 March 1996 (1996-03-22)

## Description

### BACKGROUND OF THE INVENTION

### Field of Invention

The invention relates to a portable computer and battery device thereof and, in particular, to a portable computer with an exposed battery device and the battery device.

### Related Art

The portable computer is a kind of portable personal information devices. In addition to a fixed power cord, it also has a built-in battery set. Therefore, the user can move and operate it anywhere, even outdoors, by using the battery power without being restricted by the fixed power cord.

However, as users need the batteries capable of operating the lasting time, manufacturers usually increase the number of cells inside the battery set. Nevertheless, this also increases the volume and weight of the battery. This method is against the idea of providing compact electronic devices nowadays. This may also affect the design of other components in the computer.

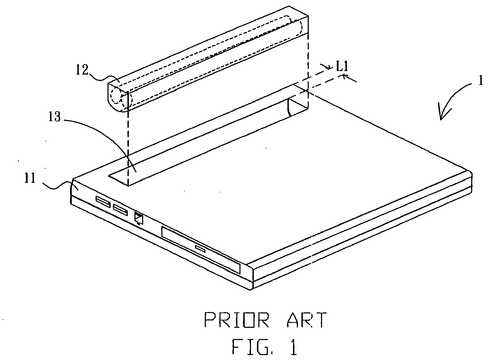

As shown in FIG. 1, a conventional portable computer 1 usually has a battery device 12 installed inside the host 11. At the bottom of the portable computer host 11, a battery containing portion 13 is provided for the battery device 12 to provide the power. The designers usually do not design the shapes of the battery device 12 and the portable computer 1. Instead, they simply design a containing portion at the bottom of the host 11. If the number of battery devices 12 increases, most space is needed to accommodate the battery devices 12. Thus, the size of the US 6,002,583 is concerned with a portable computer provided with a removable battery pack that can be hinged to the portable computer near the hinge portion where the display portion is hinged to the main body of the portable computer. The battery pack includes a first containing portion that is arranged in line with a rotating electrode and a protruding axis and a second containing portion disposed abreast the first containing portion and forming a plane with the first containing portion. The second containing portion of the battery pack extends beyond the rear end of the portable computer when the plane defined by the containing portions are in parallel with the main plane of the main body of the portable computer.

If the battery pack is rotated about the hinge axis so that it is substantially perpendicular to the main plane of the main body, the battery pack extends beyond the lower surface of the main body so as to provide a supporting element to provide an inclined keyboard of the computer.

US 6,002,583 discloses further a battery device having first, second, and third containing portions for receiving first, second, and third sets of batteries which are disposed abreast to each other within a single setting plane. Thus, the second and third containing portions of the battery device extend beyond the rear end and thus increasing the volume of the portable computer.

US 6,002,583 discloses further another battery pack having a first, a second, and a third containing portion for a first, a second, and a third battery set. The axes of the three containing portions which are parallel to each other are arranged in a triangle in a plane perpendicular thereto.

JP 10-222259 discloses a battery pack, having a first, a second, and a third containing portion for accommodating a first, a second, and a third battery set. The axes of the containing portions are in parallel with each other and in one plane that is parallel to the main plane of the main body of the portable computer. The third containing portion of the battery pack is arranged in a shell that is hinged to the housing of the first and the second containing portion along a hinge line. Therefore, the shell or housing of the third containing portion can be rotated about the hinge axis so that the longitudinal axis of the first to third containing portions form a triangle in a plane perpendicular thereto.

JP 08-076898 discloses another portable computer having a battery device freely attachable/detachable to the main body of the portable computer by means of a rotary electrode and a rotary connector. This known battery device also increases the volume of the portable computer.

It is therefore an important subject to increase the battery lasting time by increasing the number of cells without increasing the volume of the portable computer.

### SUMMARY OF THE INVENTION

In view of the foregoing, the invention provides a portable computer with a compact size and a battery device thereof.

To achieve the above, an embodiment of the invention provides a battery device including a containing shell, a first battery set, and a second battery set. The battery device is configured on the electronic device along an assembling plane. The containing shell has a first containing portion and a second containing portion. The first containing portion and the second containing portion are disposed abreast with each other and form an angle with the assembling plane. The first battery set is disposed in the first containing portion and the second battery set is disposed in the second containing portion.

To achieve the above, an embodiment portable of the invention provides a portable computer including a pivoting portion, a battery device containing portion, and a battery device. The portable computer has a display, and a host machine. The pivoting portion connects the display and the host machine. The battery device containing portion is positioned adjacent to the pivoting portion. The battery device is disposed inside the battery device containing portion. The battery device is configured on the host machine along an assembling plane. The battery device includes a containing shell, a first battery set, and a second battery set. The containing shell has a first containing portion and a second containing portion. The first containing portion and the second containing portion are disposed abreast with each other and form an angle with the assembling plane. The first battery set is disposed in the first containing portion and the second battery set is disposed in the second containing portion.

As described above, the first containing portion and the second containing portion for accommodating the battery sets inside the battery device are disposed in a non-horizontal way (in comparison with the assembling plane) and form an angle with the assembling plane. The battery device is configured at the pivoting portion of the display and the host machine. Therefore, the battery device can be integrally designed with the whole portable computer, and it is unnecessary to increase the size of the portable computer. This can reduce the cost while keeping an integrated shape, as well as the beautiful appearance is presented.

### BRIEF DESCRIPTION OF THE DRAWINGS

The invention will become more fully understood from the detailed description given herein below illustration only, and thus is not limitative of the present invention, and wherein:
FIG. 1 is a schematic view of the battery device configured in the conventional portable computer;
FIG. 2 is an exploded view of a battery device according to a preferred embodiment of the invention;
FIGS. 3A and 3B are schematic views of the battery device according to the preferred embodiment of the invention, wherein FIG. 3B shows a side view of the battery device;
FIG. 4 is an exploded view of another battery device according to the preferred embodiment of the invention; and
FIG. 5 is a schematic view of a portable computer including the battery device according to the preferred embodiment of the invention.

### DETAILED DESCRIPTION OF THE INVENTION

The present invention will be apparent from the following detailed description, which proceeds with reference to the accompanying drawings, wherein the same references relate to the same elements.

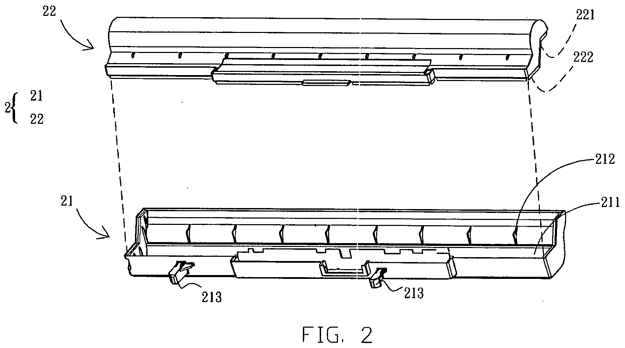

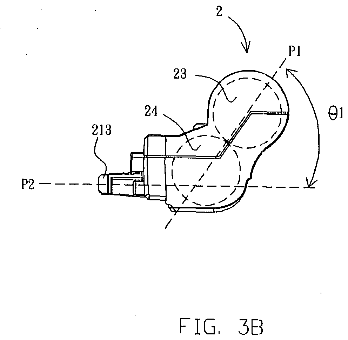

With reference to FIG. 2, a battery device 2 according to a preferred embodiment of the invention is configured on an electronic device via a connecting portion 213. It includes a first shell 21 and a second shell 22. The battery device 2 has an assembling plane P2 (as shown in FIG. 3B). In this embodiment, the connecting portion 213 is installed on the first shell 21. Certainly, it can be installed at any position on the battery device 2 according to the needs.

The first shell 21 has a first concave portion 211, a first fixing portion 212, and a connecting portion 213. The first fixing portion 212 is installed adjacent to the first concave portion 211. The connecting portion 213 is connected to the electronic device.

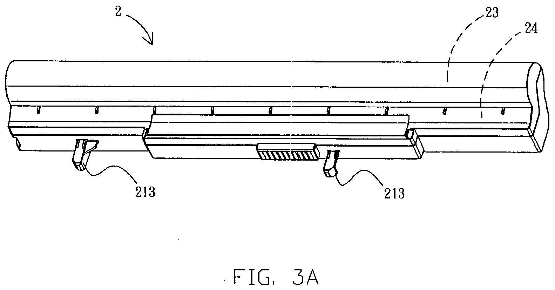

As shown in FIGS. 3A and 3B, the second shell 22 has a second concave portion 221 and a second fixing portion 222. The second concave portion 221 is installed opposite to the first fixing portion 212 so as to form a first containing portion 23. The second fixing portion 222 is installed opposite to the first concave portion 211 so as to form a second containing portion 24. In this embodiment, the first shell 21 and the second shell 22 can be connected by the method of gluing, locking, or clicking. The first containing portion 23 and the second containing portion 24 are installed abreast to each other and forma setting plane P1 (as shown in FIG. 3B), which has an angle of θ1 (as shown in FIG. 3B) relative to the assembling plane P2 composed of the battery device 2 and the electronic device. In general, the angle θ1 can be roughly between 10 degrees and 90 degrees. In more precise, the angleθ1 is between 30 degrees and 60 degrees. In this embodiment, the angle θ1 is 45 degrees.

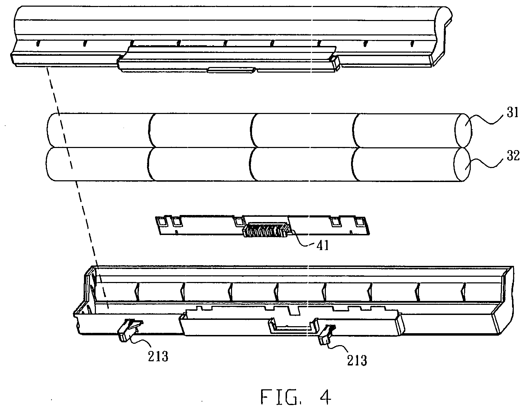

With reference to FIG. 4, the battery device 2 in this embodiment further includes a first battery set 31, a second battery set 32, and several electrical terminals 41. The first battery set 31 is installed inside the first containing portion 23, and the second battery set 32 is installed in the second containing portion 24. The electrical terminals 41 are installed on the battery device 2, on either the first shell 21 or the second shell 22 for electrically connecting to the electronic device. They are used to transmit electrical power or signals. For example, the electrical terminals 41 can be used to supply power to the electronic device or to charge the battery sets, or even to transmitting the signal of detecting the capacity of the battery sets. Thus, after a proper design, the electrical terminals 41 can be used to transmit either power or signals.

To make the portable computer and the battery device thereof of the invention more comprehensive, an example showing that the battery device 2 is applied to a portable computer will be described hereinafter.

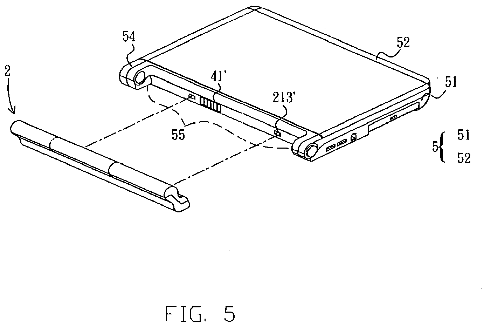

As shown in FIG. 5, the portable computer 5 of the invention includes a host machine 51 and a display 52. The portable computer further includes a pivoting portion 54, a battery device containing portion 55, and a battery device 2. In this embodiment, the pivoting portion 54 connects the host machine 51 and the display 52. The battery device containing portion 55 is installed adjacent to the pivoting portion 54. The battery device 2 is as described above. It is disposed inside the battery device containing portion 55. In the current embodiment, the battery device 2 can be installed inside the battery device containing portion 55 and connected to the portable computer 5 by the method of clicking or locking.

In this embodiment, the battery device containing portion 55 of the portable computer 5 further includes an auxiliary connecting portion 213' and conducting terminals 41'. The auxiliary connecting portion 213' is used to connect the connecting portion 213 of the battery device 2. The conducting terminals 41' are used to electrically connect to the electrical terminals 41 of the battery device 2 for transmitting power or signals between the portable computer 5 and the battery device 2.

In summary, the portable computer and the battery device thereof have a non-horizontal (in comparison with the assembling plane) design of the containing portions for the disposition of the battery sets. Thus, the battery device can be integrated into one side of the pivoting portion between the display and the host machine. This design differs from the conventional design, which disposes the battery in the recession inside the host machine. In the invention, the space for accommodating the additional battery, which is for extending the lasting time, is unnecessary. The battery device design of the invention can cut the length L1 of the conventional host machine (as shown in FIG. 1). This can save the production cost and make the products more competitive on the market.

In comparison with the conventional design, the portable computer and the battery device thereof of the invention have the following advantages:
1. Since the battery device of the invention is not designed inside the host machine of the portable computer, the length of the host machine can be reduced to render a compact electronic product.
2. The battery device of the invention is integrated in the pivoting portion between the display and the host machine, the material for the original pivoting portion can be saved. Therefore, both the cost and weight of the laptop are reduced, which encourages the consumer's purchase.
3. The battery device of the invention along with the shape of the portable computer allow more versatile designs, so that the portable computer has a more beautiful appearance to attract consumers, and is more comfortable for human body while carrying.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An electronic device, comprising:
- a portable computer having
- a display (52),
- a host machine (51),
a pivoting portion (54) connecting the display to the host machine, and
- a battery device containing portion (55) disposed adjacent to the pivoting portion; and
- a battery device (2) installed inside the battery device containing portion along an assembling plane (P2) without increasing the size of the portable computer, wherein the battery device has
- a containing shell having
- a first containing portion (23) and
- a second containing portion (24),
- a first battery set (31), and
- a second battery set (32),
**characterized in that**
the first battery set disposed (31) in the first containing portion (23) and the second battery set (32) disposed in the second containing portion (24) are disposed abreast in a non-horizontal way in comparison with the assembling plane (P2) and forming a fixed angle (θ1) with the assembling plane (P2)and **in that** the containing shell further comprises:
- a first shell (21) having a first concave portion (211) and a first fixing portion (212) disposed adjacent to the first concave portion (211); and
- a second shell (22) connected to the first shell (21) and having a second concave portion (221) and a second fixing portion (222) disposed adjacent to the second concave portion (221).

2. The electronic device of claim 1, wherein the first fixing portion (221) is installed opposite to the second concave portion (221) to form the first containing portion (23) and the second fixing portion (222) is installed opposite to the first concave portion (211) to form the second containing portion (24).

3. The electronic device of claim 1, wherein the first shell (21) and the second shell (22) are connected using a method of gluing, clicking or locking.

4. The electronic device of claim 1, wherein the angle (θ1) is between 30 degrees and 60 degrees.

5. The electronic device of claim 1, further comprising:
- a plurality of electrical terminals (41) installed for electrical connecting the electronic device to transmit power and signals.

6. The electronic device of claim 1, wherein the battery device (2) is disposed inside the battery device containing portion (55) by a method of clicking or locking.

## Patentansprüche

1. Elektronische Vorrichtung, die Folgendes umfasst:
- einen tragbaren Computer, der Folgendes aufweist:
- eine Anzeige (52),
- eine Host-Maschine (51),
- einen schwenkbaren Abschnitt (54), der die Anzeige mit der Host-Maschine verbindet, und
- einen Abschnitt (55) zum Aufnehmen der Batterievorrichtung, der angrenzend an den schwenkbaren Abschnitt angeordnet ist; und
- eine Batterievorrichtung (2), die in dem Abschnitt zum Aufnehmen der Batterievorrichtung längs einer Einbauebene (P2) eingebaut ist, ohne die Größe des tragbaren Computers zu erhöhen, wobei die Batterievorrichtung Folgendes aufweist:
- ein Aufnahmegehäuse mit
- einem ersten Aufnahmeabschnitt (23) und
- einem zweiten Aufnahmeabschnitt (24),
- eine erste Batteriegruppe (31), und
- eine zweite Batteriegruppe (32),
**dadurch gekennzeichnet, dass**
die erste Batteriegruppe (31), die in dem ersten Aufnahmeabschnitt (23) angeordnet ist, und die zweite Batteriegruppe (32), die in dem zweiten Aufnahmeabschnitt (24) angeordnet ist, nebeneinander im Vergleich zu der Einbauebene (P2) nicht horizontal angeordnet sind und einen festen Winkel (θ1) mit der Einbauebene (P2) bilden, und dadurch, dass das Aufnahmegehäuse ferner Folgendes umfasst:
- ein erstes Gehäuse (21), das einen ersten konkaven Abschnitt (211) und einen ersten Befestigungsabschnitt (212), der angrenzend an den ersten konkaven Abschnitt (211) angeordnet ist, aufweist; und
- ein zweites Gehäuse (22), das mit dem ersten Gehäuse (21) verbunden ist und einen zweiten konkaven Abschnitt (221) und einen zweiten Befestigungsabschnitt (222), der angrenzend an den zweiten konkaven Abschnitt (221) angeordnet ist, aufweist.

2. Elektronische Vorrichtung nach Anspruch 1, wobei der erste Befestigungsabschnitt (221) gegenüber dem zweiten konkaven Abschnitt (221) eingebaut ist, um den ersten Aufnahmeabschnitt (23) zu bilden, und wobei der zweite Befestigungsabschnitt (222) gegenüber dem ersten konkaven Abschnitt (211) eingebaut ist, um den zweiten Aufnahmeabschnitt (24) zu bilden.

3. Elektronische Vorrichtung nach Anspruch 1, wobei das erste Gehäuse (21) und das zweite Gehäuse (22) unter Verwendung eines Klebe-, Einschnapp- oder Einrastverfahrens verbunden sind.

4. Elektronische Vorrichtung nach Anspruch 1, wobei der Winkel (θ1) zwischen 30 Grad und 60 Grad liegt.

5. Elektronische Vorrichtung nach Anspruch 1, die ferner Folgendes umfasst:
- mehrere elektrische Anschlüsse (41), die für eine elektrische Verbindung der elektronischen Vorrichtung installiert sind, um Leistung und Signale zu übertragen.

6. Elektronische Vorrichtung nach Anspruch 1, wobei die Batterievorrichtung (2) in dem Abschnitt (55) zum Aufnehmen der Batterievorrichtung durch ein Einschnapp- oder Einrastverfahren angeordnet ist.

## Revendications

1. Dispositif électronique, comprenant :
- un ordinateur portable ayant
- un écran (52),
- une machine hôte (51),
une portion pivotante (54) raccordant l'écran à la machine hôte, et
- une portion contenant un dispositif de batterie (55) disposée à côté de la portion pivotante ; et
- un dispositif de batterie (2) installé à l'intérieur de la portion contenant le dispositif de batterie le long d'un plan d'assemblage (P2) sans augmenter la taille de l'ordinateur portable, dans lequel le dispositif de batterie comporte
- une coque de réceptacle ayant
- une première portion de réceptacle (23) et
- une deuxième portion de réceptacle (24),
- un premier kit de batterie (31), et
- un second kit de batterie (32),
**caractérisé en ce que**
le premier kit de batterie (31) dans la première portion de réceptacle (23) et le second kit de batterie (32) disposé dans la seconde portion de réceptacle (24) sont disposés côte à côte d'une manière non horizontale en comparaison avec le plan d'assemblage (P2) et en formant un angle fixe (θ1) avec le plan d'assemblage (P2) et **en ce que** la coque de de réceptacle comprend en outré :
- une première coque (21) ayant une première portion concave (211) et une première portion de fixation (212) juxtaposée à la première portion concave (211) ; et
- une seconde coque (22) raccordée à la première coque (21) et ayant une seconde portion concave (221) et une seconde portion de fixation (222) juxtaposée à la seconde portion concave (221).

2. Dispositif électronique selon la revendication 1, dans lequel la première portion de fixation (221) est installée à l'opposé de la second portion concave (221) pour former la première portion de réceptacle (23) et la seconde portion de fixation (222) est installée à l'opposé de la première portion concave (211) pour former la seconde portion de réceptacle (24).

3. Dispositif électronique selon la revendication 1, dans lequel la première coque (21) et la seconde coque (22) sont raccordées en utilisant un procédé de collage, encliquetage ou verrouillage.

4. Dispositif électronique selon la revendication 1, dans lequel l'angle (θ1) est compris entre 30 degrés et 60 degrés.

5. Dispositif électronique selon la revendication 1, comprenant en outré :
- une pluralité de bornes électriques (41) installées en vue d'une connexion électrique du dispositif électronique pour transmettre une alimentation électrique et des signaux.

6. Dispositif électronique selon la revendication 1, dans lequel le dispositif de batterie (2) est disposé à l'intérieur de la portion contenant le dispositif de batterie (55) par un procédé d'encliquetage ou verrouillage.
